# EUROPEAN PATENT APPLICATION

(11) **EP 1 332 956 A2**
(43) Date of publication of application: **06.08.2003**
(21) Application number: 03250147.0
(22) Date of filing: 09.01.2003
(51) Int. Cl.: B62J 1/16

(54) **Auxiliary child seat for bicycle**

(30) Priority: 31.01.2002 GB 0202215
(71) Applicant: BRITAX RÖMER Kindersicherheit GmbH, D-89077 Ulm (DE)
(72) Inventor: Bohringer, Ernst, 89547 Heuchilingen (DE)
(74) Representative: Hollinghurst, Antony

(57) **Abstract**

The seat body (10) of an auxiliary child seat for a bicycle has a seat portion (12), a backrest portion (14), and a headrest (38) slidably mounted for vertical movement relative to the backrest portion (14). A latching mechanism (58) secures the headrest (38) at a desired height relative to the backrest portion (14). A harness for securing a child in the seat includes a shoulder strap (90, 92) secured to an anchorage on the headrest (38).

## Description

This invention relates to an auxiliary child seat for a bicycle of the type comprising a seat body having a seat portion, a backrest portion, a headrest slidably mounted for vertical movement relative to the backrest, a latching mechanism for securing the headrest at a desired height relative to the backrest portion, and a harness for securing a child in the seat. A seat of this type is disclosed in EP-A-0 232 800.

It is known to provide an auxiliary bicycle seat of this type, adapted to be mounted behind the normal bicycle seat having a harness with a shoulder strap attached to the backrest. In order to cater for children of different sizes, a multiplicity of belt attachment slots are provided in the backrest at different heights. It is necessary to unthread the harness from one set of belt slots to another in order to adjust the height. It is an object of the invention to provide a child's pillion bicycle seat which is not subject to this disadvantage.

According to the invention, a child pillion bicycle seat of the type described above the harness includes a shoulder strap secured to an anchorage on the headrest. Consequently, the height of the shoulder strap anchorage is adjusted with the headrest.

An embodiment of the invention will now be described, by way of example, with reference to the accompanying drawings, in which:
Figure 1 is a perspective view from the rear of a bicycle fitted with a pillion seat in accordance with the invention;
Figure 2 is a perspective view from the front of the rear part of the bicycle shown in Figure 1;
Figure 3 is a cross-sectional view taken on the line 3-3 in Figure 1;
Figure 4 is a scrap cross-sectional view of a latching mechanism for the headrest in an engaged position, and
Figure 5 is a scrap cross-sectional view similar to Figure 4 but showing the latching mechanism in its released position.

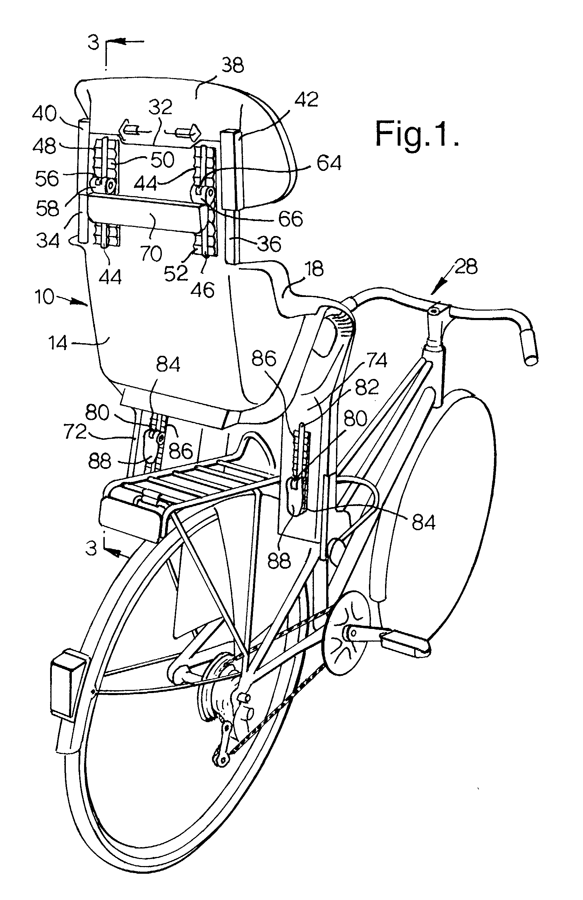

Referring to Figures 1 to 3, a child's pillion seat comprises a seat body 10 in the form of a moulded plastics shell having a seat portion 12, a backrest portion 14 and armrests 16 and 18. The seat body 10 is mounted on a pair of arms 20 and 22 which extend from a clamp 24. The clamp 24 engages with the saddle pillar 26 of a bicycle 28 so as to locate the pillion seat body 10 behind the saddle 30 of the bicycle 28.

The upper ends of the armrests 16 and 18 are substantially below the top edge 32 of the backrest portion 14. A respective pillar 34, 36 extends upwardly from the top of each side wing 16, 18 closely adjacent to the backrest portion 14. A headrest 38 has a pair of vertically extending sockets 40 and 42, each of which slidably engages round a respective pillar 34, 36, so that the headrest 38 is located in front of the backrest portion 14 with its top edge above the top edge 32 thereof.

Behind the headrest 38, the backrest portion 14 has a pair of vertically extending slots 44 and 46. Two rows of teeth 48, 50 are formed on the rear side of the backrest portion 14, on each side of the slot 44, the teeth 48, 50 of each set being separated by part-cylindrical recesses. Similar rows of teeth 52 and 54 are formed on each side of the slot 46.

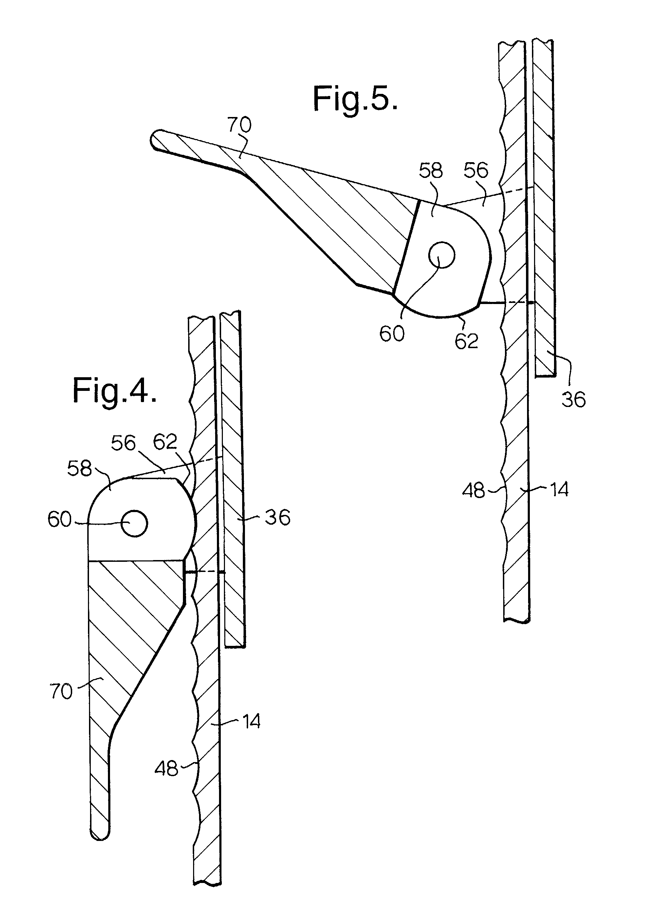

As can be seen in Figures 4 and 5, the headrest 36 carries a projection 56 which extends through the slot 44 and has a camming member 58 mounted thereon by means of a pivot pin 60. The camming member 58 has a camming surface 62 that engages between adjacent rows of teeth 48 and 50 when in the position shown in Figure 4 but is disengaged therefrom when the camming member 58 is turned through about 100° to the position shown in Figure 5.

A similar projection 64 extends through the other slot 46 and carries a camming member 66 of the same shape as the first mentioned camming member 58 and has a camming surface to engage with the rows of teeth 52 and 54.

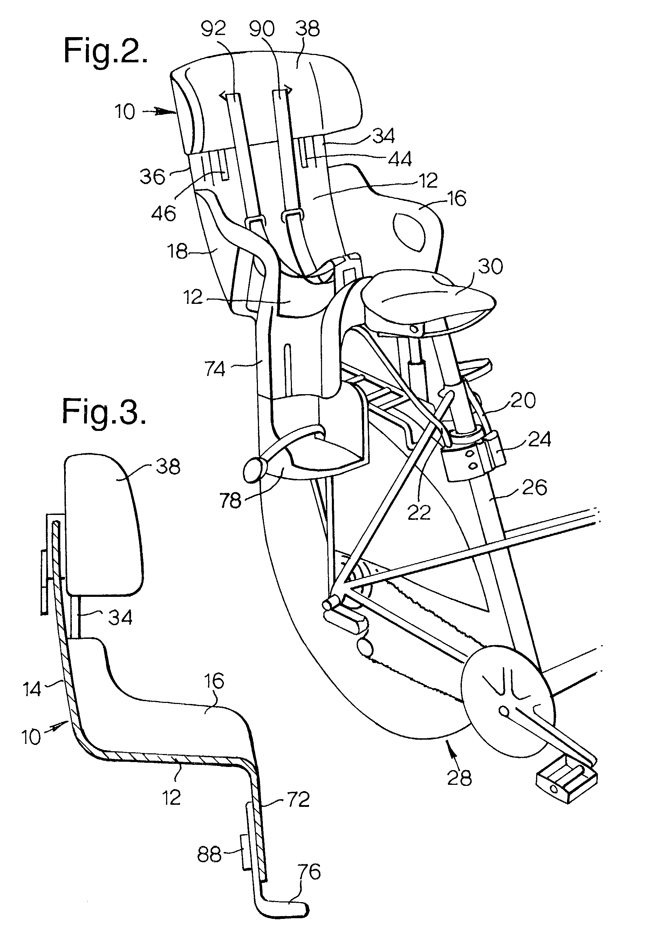

The two camming members 58 and 66 are linked by a common lever 70 which extends therebetween and by which they can be moved between their locking and released position. When the lever 70 is in the position shown in Figure 4, the headrest 36 is free to slide along the pillars 34 and 36. When the lever 70 is in the position shown in Figure 3, such sliding movement is prevented.

Reverting to Figures 1 to 3, the seat body 10 also has integrally formed leg supports 72 and 74 extending downwardly from the front corners of the seat portion 12. Each leg support 72, 74 has a respective footrest 76, 78 slidably mounted thereon for vertical movement relative thereto. The footrest 78 has a projection 80 that extends through a slot 82 in the corresponding leg support 74. Rows of teeth 84 and 86 on each side of the slot 82 are engaged by a camming member 88 in a similar manner to that shown in Figures 4 and 5, in order to secure the footrest 78 at a desired height relative to the leg support 74. A similar mechanism, the various parts of which are denoted by the same reference numerals, serves to secure the other footrest 76 at a desired height relative to its leg support 72.

The seat body 10 is provided with a harness comprising a pair of shoulder straps 90 and 92 which extend from respective anchorage points on the headrest 38 to a buckle 94 mounted centrally on the seat portion 12 near the front edge thereof.

The teeth 48 and 58 and the camming member 58 may be replaced by an alternative locking arrangement such as a clamping screw pressing the backrest portion 14 and the headrest 38 into frictional engagement with one another.

## Claims

1. An auxiliary child seat for a bicycle of the type comprising a seat body (10) having a seat portion (12), a backrest portion (14), a headrest (38) slidably mounted for vertical movement relative to the backrest portion (14), a latching mechanism (58) for securing the headrest (38) at a desired height relative to the backrest portion (14), and a harness for securing a child in the seat, **characterised in that** the harness includes a shoulder strap (90, 92) secured to an anchorage on the headrest (38).

2. An auxiliary child seat according to claim 1, wherein one of the backrest portion (14) and the headrest (38) has a row of teeth (48, 50) formed thereon and the latching mechanism comprises a camming member (58) pivotally mounted on the other of the backrest portion (14) and the headrest (38), and adapted to engage between adjacent teeth.
